(19) Europäisches Patentamt / European Patent Office / Office européen des brevets

(11) **EP 3 279 632 B1**

(12) **EUROPEAN PATENT SPECIFICATION**

(45) Date of publication and mention
of the grant of the patent:
**19.02.2020  Bulletin 2020/08**

(51) Int Cl.:
*G01M 13/02* *(2019.01)*      *B61K 9/06* *(2006.01)*
*F16C 1/00* *(2006.01)*       *G01M 13/04* *(2019.01)*
*G01M 17/10* *(2006.01)*      *G01M 99/00* *(2011.01)*

(21) Application number: **16182903.1**

(22) Date of filing: **05.08.2016**

(54) **TESTING APPARATUS AND METHOD FOR TESTING THE THERMAL BEHAVIOR OF AN AXLEBOX**

PRÜFVORRICHTUNG UND VERFAHREN ZUR PRÜFUNG DES THERMISCHEN VERHALTENS EINES ACHSLAGERS

APPAREIL ET PROCÉDÉ D'ESSAI PERMETTANT DE TESTER LE COMPORTEMENT THERMIQUE D'UN ESSIEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.02.2018  Bulletin 2018/06**

(73) Proprietor: **KNORR-BREMSE
Systeme für Schienenfahrzeuge GmbH
80809 München (DE)**

(72) Inventor: **KREMER, Miklos
1215 Budapest (HU)**

(56) References cited:
**CN-A- 105 136 457     US-A- 4 659 043**

## Description

The invention relates to a testing apparatus for testing the thermal behavior of an axlebox, especially a railway axlebox, comprising a sample chamber for placing an axlebox comprising an axlebox housing, an axle end with an axle journal, and a bearing located between the axle journal and the axle housing, and at least one temperature measuring means. The invention further relates to a method for testing the thermal behavior of a railway axlebox.

The thermal behavior of railway axleboxes has to be tested before serial production for a railway vehicle can be started. Testing the thermal behavior of a railway axlebox under real environment conditions, e.g. in a real vehicle at high changing speeds and with different loads, is costly and can be dangerous as a bearing failure due to a thermal overrun can lead to a broken axle.

Document CN 105 136 457 A discloses a high/low-temperature controllable multi-specification rolling bearing test bench. The test bench comprises a bearing test box including an annular heating plate as a heating device arranged in its casing.

It is therefore an object of the present invention to provide an apparatus and a method for testing a thermal behavior of a railway axlebox where the testing of the thermal behavior can be performed without a railway vehicle and without tests under real operating conditions.

This object is solved by a testing apparatus for testing the thermal behavior of an axlebox with the features of claim 1 as well as with a method for testing the thermal behavior of a railway axlebox with the method steps of claim 14. Preferred configurations of the invention are defined in the dependent claims.

In a testing apparatus for testing the thermal behavior of an axlebox, especially a railway axlebox, according to the present invention, the testing apparatus comprises a sample chamber for placing an axlebox comprising an axlebox housing, an axle end with an axle journal, and at least one bearing located between the axle journal and the axlebox housing, and at least one temperature measuring means. The testing apparatus further comprises at least one heating element for replacing the bearing or the bearings and/or one or more bearing rings of the bearing or of the bearings and/or at least one rolling element of the bearing or of the bearings, and a heating power control for controlling a heating power of the at least one heating element.

In the sample chamber of the testing apparatus according to the present invention, an axlebox which comprises an axlebox housing, an axle end with an axle journal and a bearing located between the axle journal and the axle housing is placed during the testing of the thermal behavior of an axlebox. The axlebox housing can optionally have a lid and fittings. The axlebox forms the object to be tested, but is not part of the testing apparatus itself.

The testing apparatus further comprises at least one temperature measuring means. This means that one or more temperature measuring means can be used. The temperature measuring means are configured to measure the thermal behavior of the axlebox to be tested. The temperature measuring means are configured and arranged in such a way that they can measure the temperatures of the axlebox resp. the heat which is emitted by the axlebox during testing.

The testing apparatus for testing the thermal behavior of the axlebox comprises at least one heating element for replacing the bearing or a bearing ring of the bearing or at least one rolling element of the bearing. The axlebox can also have more than one bearing. The testing apparatus therefore has one or more heating elements. The heating elements induce heat into an axlebox as the object to be tested. During testing, the bearing, a bearing ring of the bearing or at least one rolling element of the bearing are replaced by the one or more heating elements. If the axlebox has more than one bearing, also more than one bearings can be replaced by heating elements. Also, one and more bearing rings can be replaced by thermal elements, or one or more rolling elements of one or more bearings can be replaced. Also, combinations of these replacements are possible. In addition or alternatively, one or more heating elements can be inserted into the bearing or into the bearings.

The heating element or elements can be placed at a variety of locations in the axlebox, replacing the bearing or bearings, a bearing ring or bearing rings of the bearing or of the bearings or one or more rolling elements of the bearing or of the bearings. If more than one heating element is used, heating elements can be placed at several positions within the axlebox. For example, they can be equally distributed on a bearing ring or the bearing or on the surface of a bore of the axlebox housing and/or on the axle journal.

The testing apparatus further comprises a heating power control for controlling a heating power of the at least one heating element. With the heating power control, the heating power of the at least one heating element can be controlled in such a way that the heating resp. the thermal energy emitted by the heating element is equivalent to the heating resp. the thermal energy which is generated by the forces and the friction acting in the bearing during real operation of the bearing in a railway axlebox. Therefore in the inventive testing apparatus, the temperature which would be generated by friction in real operation is induced into the axlebox by using suitable electrical heating elements, thus simulating the real friction. The roller or the bearing themselves are removed and they are substituted by one or more electric heating elements. A changing rail vehicle velocity or load, and thus the variation in the friction and thus in the heat generation in the axlebox can be simulated by changing the electrical load of the heating elements accordingly. The axlebox temperature distribution is then measured by the at least one temperature measuring means.

With a testing apparatus for testing the thermal behavior of an axlebox according to the present invention, the thermal behavior of a railway axlebox can be tested in a cost-effective and safe way outside a railway vehicle, making it possible to perform the tests without requiring a real environment and vehicle tests. The changing conditions in operation of the axlebox can be flexibly simulated by changing the load of the heating elements, making it possible to perform the tests of the thermal behavior of an axlebox without requiring real driving tests under real environment conditions in an especially equipped vehicle. The measured temperature distribution which is obtained by the testing of the thermal behavior of the axlebox in the testing apparatus according to the present invention can be used for improved axlebox design or development of improved hotbox detections.

In an advantageous configuration of the testing apparatus according to the invention, the at least one heating element is provided to be located on an outer bearing ring on the top side of the bearing or on an inner bearing ring on the top side of the bearing.

A part of the friction-generated heat, or even the largest part, is occurring on the upper part of the axlebox bearing's outer ring or outer rings, as the load during operation is mainly there, and the heat is mainly distributed towards the surrounding outside. By placing the at least one heating element on an outer bearing ring on the top side of the bearing, this main source of heat generation through friction during operation of the axlebox is simulated.

Another part of the friction-generated heat appears on the upper part of the rotating inner ring or inner rings, which will be mainly distributed towards the surface of the axle journal concentrically. By placing a heating element on an inner bearing ring on the top side of the bearing, this source of heat generation through friction is also adequately simulated.

In case of a rotating inner ring or inner rings, since the heat is mainly generated on the top side of the axle journal, and the top side is constantly changing with the rotation, the heat is distributed on the whole cylinder of the inner bearing and of the axle journal.

In another advantageous configuration of the testing apparatus according to the present invention, the at least one heating element is provided to be located between the outer bearing ring or the outer bearing rings and the inner bearing or the inner bearing rings on the topside of the bearing or the bearings or on the whole surface of the bearing rings.

In another advantageous configuration of the testing apparatus according to the present invention, the at least one heating element is provided to be located between the axlebox housing and the axle journal on the top or/and at least one heating element is provided to be located between the axlebox housing an the axle journal on the whole surface of the axlebox housing and/or of the axle journal.

In another advantageous configuration of the testing apparatus according to the present invention, the heating power control is configured to control the heating power of the at least one heating element as a function of the friction coefficient of the bearing, the radial forces in the bearing during operation of a vehicle of the train in which the axlebox is intended to be mounted, the train speed and the geometry of the wheel of the vehicle and the gemometry of the axle journal.

The heat resp. the thermal energy which is generated by friction in the bearing during operation of the axlebox under real conditions is dependent on the friction forces in the bearing and the relative velocity between the surfaces of the bearing in which the friction is generated. The friction forces in the friction surfaces of the bearing are a function of the friction coefficient and the forces acting in the surfaces. The forces acting on the surfaces are a function of the radial forces in the bearing during operation of a vehicle of a train in which the axlebox is intended to be mounted, and therefore of the load acting on the bearing. These radial forces generate tangential forces in the surfaces of the bearing where the friction is generated. The relative velocity of the surfaces of the bearing in which the friction is generated is a function of the rotating speed of the bearing, which in turn is a function of the train speed and the geometry of the wheel and the geometry of the axle journal. The heating power during simulation of normal operation of the axlebox operation, equal to the thermal energy generated through friction during real operation, can be obtained according to the formula

$$p_{fric} = \mu \cdot F_{radial} \cdot r_{journal} \cdot v_{vehicle}/r_{wheel}.$$

Herein, $\mu$ is the friction coefficient, $F_{radial}$ is the radial force acting in the bearing, which is dependent on the load of the vehicle, $r_{journal}$ is the radius of the axle journal, $v_{vehicle}$ is the velocity of the vehicle, dependent on the train speed, and $r_{wheel}$ is the wheel radius.

The values for the friction coefficient $\mu$ are typically $1.0 \dots 1.5 \cdot 10^{-3}$ for cylindrical rollers, $2.0 \dots 2.5 \cdot 10^{-3}$ for spherical rollers and $1.7 \dots 2.5 \cdot 10^{-3}$ for conical rollers.

In another advantageous configuration of the testing apparatus according to the present invention, the heating power control is configured to the control heating power of the at least one heating element according to a failure operation of the bearing. The heating power can also be estimated on the basis of thermal friction power during failure operation. The heating power for simulating failure operation, which is controlled by the heating power control for controlling the heating power of the at least one heating element, can be obtained by the formula

$$p_{fric} = \mu \cdot e^{t/T} \cdot F_{radial} \cdot r_{journal} \cdot v_{vehicle}/r_{wheel},$$

wherein t is the time and T is the characteristic time of the failure process.

In another advantageous configuration of the testing apparatus according to the present invention, the at least one temperature measuring means comprises an infrared camera, a thermal camera or a temperature sensor.

The axlebox temperature distribution is measured by the temperature measuring means of the testing apparatus. The temperature distribution of the axlebox can be measured e.g. by an infrared camera, a thermal camera or a temperature sensor. With these temperature measuring means, not only the temperature itself, but also the distribution of the temperature over the surface of the axlebox can be measured.

In still another advantageous configuration of the testing apparatus according to the present invention, the testing apparatus further comprises simulation means for simulating the wind speed of a train. The wind speed of the train influences the temperature distribution on the surface of an axlebox of a railway vehicle during real operation of the railway vehicle. It is therefore advantageous in the testing operation to also simulate the cooling effect on the axlebox caused by the wind speed of the train. The wind occurring during operation in a railway vehicle can therefore e.g. be simulated by a fan, so that for the testing in the testing apparatus also environmental conditions like the airflow of the real vehicle operation can be adequately simulated.

Preferably, the simulation means for simulating the wind speed of a train comprise a controllable wind channel. If a controllable wind channel is used, an even more exact simulation of the wind speed of the train in operation can be simulated with a testing apparatus compared with the simulation of the wind speed by using a simple fan.

In still another advantageous configuration of the testing apparatus according to the present invention, the testing apparatus comprises simulation means for simulating the weather conditions in which a train is operated. The weather conditions in which the train is operated have a high influence on the temperature in an axlebox and on the temperature distribution on the surface of the axlebox. With the testing apparatus according to the present invention, the environmental conditions, such as weather conditions, can also be simulated. As example for weather conditions, e.g. rain, the influence of the sunshine, the wind as already outlined above, or thermal conditions, can be simulated. All these weather conditions influence the temperature distribution of the axlebox under test and therefore have to to be considered in the testing process if an adequate testing result should be achieved.

Preferably, the simulation means for simulating the weather conditions comprise means for water spraying and/or for heat radiation. As outlined above, rain and sunshine have a high influence over the temperature in the axlebox and the temperature distribution on the surface of the axlebox. For simulating rain, the testing apparatus comprises means for water spraying which spray water onto the axlebox under test in order to simulate rain in the real environment. The testing apparatus can also comprise means for heat radiation, which simulate the sunshine which radiates onto the axlebox in a real vehicle and also causes an increase in the temperature of the axlebox.

In another advantageous configuration of the testing apparatus according to the present invention, the sample chamber is configured for placing an axlebox further comprising an onboard hotbox detection system.

Hotbox detection systems are used in order to detect if an overheating of the axlebox during the operation of the vehicle exists. A bearing failure due to a thermal overrun in the axlebox can lead to a broken axle and therefore has to be avoided during operation under all circumstances. With the testing apparatus according to the present invention, having a sample chamber which is configured for placing an axlebox which comprises an onboard hotbox detection system, also hotbox detection systems can be tested in the testing apparatus.

A hotbox detection system measures the heat radiated from the axlebox. If the radiated heat exceeds a certain threshold, the hotbox detection system detects an overheated axlebox and generates a warning. The thresholds, algorithms, locations, etc. of the hotbox detection system can be tested in the testing apparatus together with the axlebox under test. With the heating elements, the heat which is radiated by the axlebox and should be detected by the onboard hotbox detection system can be varied flexibly according to the needs for testing the onboard hotbox detection system.

In another advantageous configuration of the testing apparatus according to the present invention, the sample chamber is configured for placing a trackside hotbox detection system.

In this configuration of the testing apparatus, a trackside hotbox detection system can be included in the sample chamber during the testing procedure. This makes it possible to perform tests of trackside hotbox detection systems and algorithms for trackside hotbox detection systems. The trackside hotbox detection system in the sample chamber can detect the heat radiated from the railway axlebox which is placed in the sample chamber during the test. The heat which is radiated by the axlebox can be controlled by controlling the heating power of the at least one heating element in the axlebox under test. This makes it possible to change the heat which is radiated from the axlebox and which should be detected by the trackside hotbox detection system which is placed in the sample chamber.

In still another advantageous configuration of the testing apparatus according to the present invention, the testing apparatus further comprises an aperture with an adjustable opening time.

The trackside hotbox detection system detects the heat which is radiated by the axleboxes of the trains which are passing the trackside hotbox detection system. In contrast to onboard hotbox detection systems, the trackside hotbox detection system can, due to the passing vehicles, only for a very short period of time receive and detect the heat radiated by an axlebox of a passing railway vehicle. This short period of time can be simulated in the testing apparatus by using an aperture with an adjustable opening time. The aperture with the adjustable opening time is preferably placed between the trackside hotbox detection system placed in the sample chamber and the axlebox placed in the sample chamber during the tests.

By adjusting the opening time of the aperture between the axlebox and the trackside hotbox detection system, the short time period during which the heat from the axlebox is radiated towards the trackside hotbox detection system can be simulated in the testing apparatus. The faster a passing train, the shorter the opening time of the aperture. With this embodiment of the testing apparatus, therefore a test of trackside hotbox detection system or its algorithms is possible under conditions which closely match the conditions on a real railway.

In a further advantageous configuration of the testing apparatus according to the present invention, the testing apparatus further comprises control and data logger equipment configured to play selected train runs and to log the temperatures of selected locations of the axlebox.

By playing selected train runs, the heat resp. the thermal energy which is generated through the friction in an axlebox in the course of real trail runs can be simulated and controlled. Therefore, real train runs can be simulated in the testing apparatus, matching closely the thermal behavior of an axlebox as it is occurring under real operating conditions. For example, different speed profiles of trains, trains running on steep uphill or downhill rates, intermissions/standstill during the train operation and train operation under a variation of environmental conditions can be simulated. With the data logger equipment, the temperatures of selected locations of the axlebox, measured by the at least one temperature measuring means, can be logged and stored.

In another advantageous configuration embodiment of the testing apparatus according to the present invention, the testing apparatus comprises a plurality of heating elements, and the heating power control is configured to control the heating power of the heating elements unsymmetrically in order to simulate unsymmetrical heat distribution in case of braking or acceleration.

In this configuration, a plurality of heating elements are located in the axlebox, replacing the bearing or a bearing ring of the bearing or at least one rolling element of the bearing. The heating power control can control the heating power of the heating elements in an unsymmetrical way. That means that some heating elements generate more heat than others, and that, having a symmetry of the axlebox and the axle end at the bearing, heating elements placed at locations which are symmetric to locations on which other heating elements are placed are controlled in such a way that they generate a heat which differs from the heat generated by the heating elements which are placed on the symmetric locations. With the non-symmetric control of the heat generated by the heating elements, a different heat distribution in case of traction and braking can be simulated. During traction and braking, the forces in the axlebox and in the bearing of the axlebox change in comparison to the forces acting during normal, unaccelerated operation. For example, the maximum force usually occurs on the top side of the bearing, but can move during braking or acceleration more to one on the other side of the bearing in rotation direction of the bearing. This change in level and direction of forces, and therefore of the friction forces, and thus the change in heat generation during braking and acceleration can be simulated in the testing apparatus.

In an innovative method for testing the thermal behavior of a railway axlebox, an axlebox comprising an axlebox housing, an axle end with an axle journal and a bearing located between the axle journal and the axlebox housing is placed in a sample chamber of a testing apparatus. The bearing or a bearing ring of the bearing or at least one rolling element of the bearing is replaced with at least one heating element. The heating power of the at least one heating element is controlled. Then, at least one temperature of the axlebox is measured.

For the tests, an axlebox is placed in a sample chamber of a testing apparatus. The axlebox comprises an axlebox housing, an axle end with an axle journal and a bearing located between the axle journal and the axlebox housing. The bearing is replaced by at least one heating element. Instead of the whole bearing, a bearing ring, for example the outer or the inner bearing ring of the bearing, or one or more rolling elements of the bearing are replaced with one or more heating elements. The heating elements induce heat resp. thermal energy into the location where they are placed at. For this purpose, the heating power of the at last one heating element is controlled. This makes it possible to generate a heat with the heating element which is equivalent to the heat which would be generated during operation of the axlebox in a railway vehicle under real load, caused by the friction in the bearing. Then, at least one temperature of the axlebox is measured. Also more than one temperature or the temperature distribution over the surface of the axlebox can be measured. With the method, it is possible to test the thermal behavior of a railway axlebox as if the railway axlebox would be operated under real conditions in a railway vehicle without requiring driving tests with the railway vehicles.

In an advantageous configuration of the method according to the present invention, the heating power of the at least one heating element is controlled in a way that the heating power is equivalent to the heat resp. the thermal energy which is generated by the friction in a bearing of the vehicle in operation under different load and speed conditions. This makes it possible to perform the testing of the thermal behavior of a railway axlebox under conditions which are identical or similar to real conditions, especially considering the heat generated in the axlebox during a real operation of the axlebox in the railway vehicle. As outlined above, the heating power depends on the radial forces in the bearing, the friction coefficient of the bearing, the vehicle speed and the geometry of the wheel and the axle journal.

In another advantageous econfiguration of the method according to the present invention, the wind speed and/or the weather conditions are simulated. Weather conditions can, for example, be rain which can be simulated by spraying water, sunshine which can be simulated by heat radiation, or wind which can be can be simulated by using a fan or a wind tunnel. Also, tunnel conditions can be simulated. This makes it possible to bring the conditions under which the axlebox is tested very close to the real conditions under which an axlebox is operated in a railway vehicle.

In another advantageous configuration of the method according to the present invention, the temperature conditions, the humidity conditions and/or the airspeed conditions on the outside of the axlebox are varied. As outlined before, this makes it possible to test the thermal behavior of a railway axlebox under conditions which are as close as possible to the conditions in a real operation of the railway vehicle.

Preferred embodiments of the invention are described exemplarily referring to the drawings, in which:

Fig. 1: shows an embodiment of the testing apparatus according to the invention; and

Fig. 2: shows an axlebox which is to be tested in the testing apparatus according to the invention.

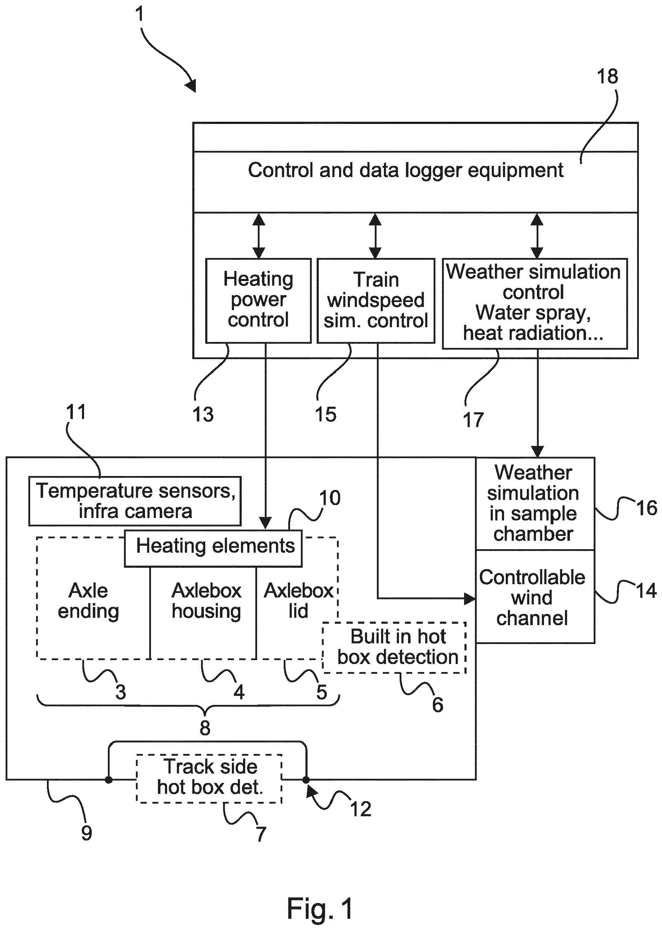

**Fig. 1** shows a testing apparatus 1 for testing the thermal behavior of an axlebox 8 which comprises an axle ending 3, an axlebox housing 4 and an axlebox lid 5. In addition, the object to be tested comprises a built-in hotbox detection 6 and a trackside hotbox detection 7. Since these are the test objects, but not part of the invention, they are shown in dotted lines.

The testing apparatus 1 comprises a sample chamber 9 in which the axlebox 8 which has to be tested is placed during the test. In the example shown in Fig. 1, also a built-in hotbox detection 6 and a trackside hotbox detection 7 are located in the sample chamber 9 of the testing apparatus 1 during the test.

For the test, in the axlebox 8 one or more heating elements 10 are placed which replace the bearing or a bearing ring of the bearing or at least one rolling element of the bearing which is located between the axle journal resp. the axle ending 3 and the axlebox housing 4. In the embodiment according to Fig. 1, a plurality of heating elements 10 is placed in the axlebox 8 under test.

The temperature of the surface of the axlebox housing 4 of the axlebox 8 is measured through temperature sensors 11 or infrared cameras. This makes it possible to measure the temperature and the temperature distribution over the surface of the axlebox housing 4 of the axlebox 8.

In the testing configuration shown in Fig. 1, the system under test also comprises a built-in hotbox detection 6. The purpose of the built-in hotbox detection 6 is to detect an overheated axlebox 8, caused by damaged bearings in the axlebox 8. Therefore in the testing apparatus shown in Fig. 1, also the built-in hotbox detection system 6 and/or the algorithms of the built-in hotbox detection system 6 can be tested during the testing procedure. It can therefore be tested if the built-in hotbox detection 6 safely detects an overheated axlebox 8 through comparison of the temperature thresholds of the built-in hotbox detection 6 with the temperatures which are measured by the temperature measuring means 11 on the outside of the axlebox housing 4.

In the sample chamber 9 of the testing apparatus 1 according to Fig. 1, also a trackside hotbox detection system 7 is placed. Therefore, with the configuration shown in Fig. 1, additionally the trackside hotbox detection 7 or the detection algorithms of the trackside hotbox detection 7 can be tested. For this purpose, in the sample chamber 9, also an aperture 12 is located between the axlebox housing 4 of the axlebox 8 and the trackside hotbox detection system 7. The aperture 12 opens for a short period of time which simulates the time span when an overheated axlebox of a real railway vehicle rolls over a real trackside hotbox detection system. This aperture therefore simulates the time period for which heat is radiated from an overheated axlebox 8 onto a trackside hotbox detection system 7. The timing of the aperture 12 can be adapted according to a velocity of a railway vehicle in a real operation so that the trackside hotbox detection system 7 and its algorithms can be tested under conditions which closely match the conditions under real operation for detecting overheated axleboxes with trackside hotbox detection systems.

A heating power control 13 controls the heating power of the heating elements 10. The heating power control 13 can control the heating power of the heating elements 10 according to a heating power which would be caused by friction in the bearing in the operation of the axlebox 8 in a real railway vehicle, the heat depending on the friction coefficient of the bearing, the load of the vehicle, the geometry of the wheel and the geometry of the axle ending 3 and the velocity of the vehicle.

The testing apparatus 1 shown in Fig. 1 comprises a controllable wind channel 14. In the controllable wind channel, wind speeds can be generated and controlled in such a way that they match the drive wind of a real railway vehicle so that the cooling effects of the drive wind is simulated in the testing apparatus according to Fig. 1 in such a way that it matches the drive wind and its cooling effect as occurring in a real vehicle under real operating conditions. The controllable wind channel 14 is controlled by a train wind speed simulation control 15 which controls the wind speed of the wind channel 14 according to the test conditions which are desired for performing the test.

In addition, the testing apparatus 1 according to Fig. 1 comprises a weather simulation 16 in the sample chamber 9. With the weather simulation 16, the weather conditions can be simulated in the sample chamber 9 in order to match the operating conditions under real operation for the testing procedure. With the weather simulation 16, for example water can be sprayed on the axlebox housing 4 or heat can be radiated onto the axlebox housing 4 in order to simulate the effect of sunshine on the thermal behavior of the axlebox 8. The weather simulation 16 in the sample chamber 9 is controlled by a weather simulation control 17 which controls water spraying and heat radiation according to the requirements which have to be fulfilled for successfully performing the test.

The heating power control 13, the train wind speed control 15 and the weather simulation control 17 are part of a control and data logger equipment 24. With the control and data logger equipment 24, the test procedure can be controlled in such a way that the test procedure matches the operation of the axlebox 8 under real operating conditions. With the control and data logger equipment 24, selected train runs can be played during the test, simulating real operating scenarios. In addition, with the control and data logger equipment 24, the temperature data from the temperature measuring means can be received, stored and analyzed.

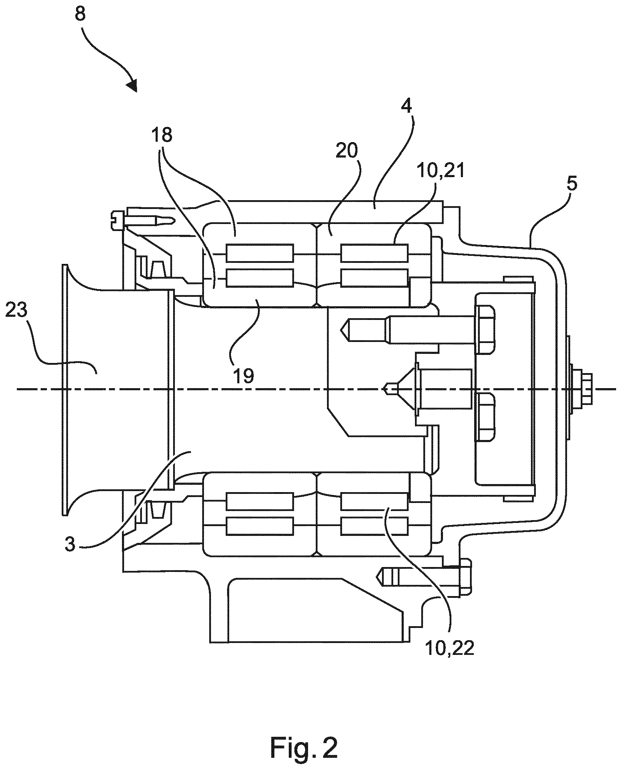

**Fig. 2** shows an axlebox 8 which is the object to be tested in a testing apparatus 1 according to the present invention shown in Fig. 1, by way of example.

The axlebox 8 comprises an axlebox housing 4. On one side of the axlebox 8, the axle 23 with the axle ending or axle journal 3 enters the axlebox housing 4. On the other side of the axlebox 8, the axlebox housing 4 is closed by an axlebox lid 5.

Between the axle ending or axle journal 3 of the axle 23 and the axlebox housing 4, a roller bearing 18 is located. The roller bearing 18 transmits the forces occurring during operation of a railway vehicle, i.e. the static forces of the load of the railway vehicle as well as dynamic forces, between the axlebox housing 4 and the axle ending 3 of the axle 23.

In the axlebox 8 under test shown in Fig. 2, in the roller bearing 18, the rolling elements between the inner ring 19 and the outer ring 20 of the roller bearing 18 are replaced by heating elements 10. In the axlebox 8, heating elements 10, 21 are located on the outer ring 20 of the roller bearing 18. In addition, heating elements 10, 22 are also located on the inner ring 19 of the roller bearing 18. In the roller bearing 18 of the axlebox 8 of Fig. 2, all roller elements of the bearing 18 are replaced by heating elements 10, 21, 22. Therefore, heat can be induced into the axle ending or axle journal 3 as well as into the axlebox housing 4 over the whole circumference of the axle ending 3 and the axlebox housing 4. It is therefore possible to simulate every possible location of heat generation and in the axlebox 8 and to investigate its influence on the thermal behavior of the axlebox 8.

REFERENCE NUMERALS

| | |
|---|---|
| 1 | testing apparatus |
| 2 | sample chamber |
| 3 | axle ending or axle journal |
| 4 | axlebox housing |
| 5 | axlebox lid |
| 6 | built-in hotbox detection |
| 7 | trackside hotbox detection |
| 8 | axlebox |
| 9 | sample chamber |
| 10 | heating elements |
| 11 | temperature measuring means |
| 12 | aperture |
| 13 | heating power control |
| 14 | controllable wind channel |
| 15 | train wind speed simulation control |
| 16 | weather simulation in sample chamber |
| 17 | weather simulation control |
| 18 | roller bearing |
| 19 | inner ring of bearing |
| 20 | outer ring of bearing |
| 21 | heating elements on outer ring |
| 22 | heating elements on inner ring |
| 23 | axle |
| 24 | control and data logger equipment |

**Claims**

1. A testing apparatus (1) for testing the thermal behavior of an axlebox (8), especially a railway axlebox, comprising

    - a sample chamber (9) for placing an axlebox (8) comprising an axlebox housing (4), an axle end (3) with an axle journal and at least one bearing (18) located between the axle journal and the axlebox housing (4), and
    - at least one temperature measuring means (11),
    **characterized by**

        at least one heating element (10, 21, 22) for replacing the bearing or bearings (18) and/or one or more bearing rings (19, 20) of the bearing or the bearings and/or at least one rolling element of the bearing or the bearings (18), and
        a heating power control (13) for controlling a heating power of the at least one heating element (10, 21, 22).

2. The testing apparatus (1) according to claim 1, wherein the at least one heating element (10, 21, 22) is provided to be located between the outer bearing ring (20) or the outer bearing rings and the inner bearing ring (18) or the inner bearing rings on the topside of the bearing (18) or the bearings or/and on the whole surface of the bearing rings.

3. The testing apparatus (1) according to one of the preceding claims, wherein the at least one heating element (10, 21, 22) is provided to be located between the axlebox housing (4) and the axle journal (3) on the top or/and at least one heating element (10, 21, 22) is provided to be located between the axlebox housing (4) and the axle journal (3) on the whole surface of the axlebox housing and/or of the axle journal.

4. The testing apparatus (1) according to one of the preceding claims, wherein the heating power control (13) is configured to control the heating power of the at least one heating element (10, 21, 22) as a function of the friction coefficient of the bearing (18), the radial forces in the bearing (18) during operation of a vehicle of a train in which the axlebox (8) is intended to be mounted, the train speed and the geometry of a wheel of the vehicle and of the axle journal.

5. The testing apparatus (1) according to one of the preceding claims, wherein the heating power control (13) is configured to control the heating power of the at least one heating element (10, 21, 22) according to a failure operation of the bearing (18).

6. The testing apparatus (1) according to one of the preceding claims, wherein the at least one temperature measuring means (11) comprises an infrared camera, a thermal camera or a temperature sensor.

7. The testing apparatus (1) according to one of the preceding claims, wherein it further comprises simulation means (14, 15) for simulating the wind speed of a train, and wherein the simulation means (14, 15) for simulating the wind speed of a train comprises a controllable wind channel (14).

8. The testing apparatus (1) according to one of the preceding claims, wherein it further comprises simulation means (16, 17) for simulating the weather conditions in which a train is operated, and wherein the simulation means (16, 17) for simulating the weather conditions comprise means (16) for water spraying and/or for heat radiation.

9. The testing apparatus (1) according to one of the preceding claims, wherein the sample chamber (9) is configured for placing an axlebox (8) further comprising an onboard hotbox detection system (6).

10. The testing apparatus (1) according to one of the preceding claims, wherein the sample chamber (9) is configured for placing a trackside hotbox detection system (7).

11. The testing apparatus (1) according to one of the preceding claims, wherein the testing apparatus further comprises an aperture (12) with an adjustable opening time.

12. The testing apparatus (1) according to one of the preceding claims, wherein it further comprises control and data logger equipment (24) configured to play selected train runs and to log the temperatures of selected locations of the axlebox (8).

13. The testing apparatus (1) according to one of the preceding claims, wherein it comprises a plurality of heating elements (10, 21, 22) and the heating power control (13) is configured to control the heating power of the heating elements (10, 21, 22) unsymmetrically in order to simulate unsymmetrical heat distribution in case of braking or acceleration.

14. A method for testing the thermal behavior of a railway axlebox (8), comprising the following steps:

    - placing an axlebox (8) comprising an axlebox housing (4), an axle end (3) with an axle journal and a bearing (18) located between the axle journal and the axlebox housing (4) in a sample chamber (9) of a testing apparatus (1),
    - replacing the bearing (18) or bearings or a bearing ring or bearing rings (19, 20) of the bearing (18) or of the bearings or at least one rolling element of the bearing (18) or of the bearings with at least one heating element (10, 21, 22),
    - controlling a heating power of the at least one heating element (10, 21, 22),
    - measuring at least one temperature of the axlebox (8).

15. The method according to claim 14, wherein the heating power of the at least one heating element (10, 21, 22) is controlled such that the heating power is equivalent to the heat generated by the friction in a bearing (18) of a vehicle in operation under different load and speed conditions.

16. The method according to claim 14 or 15, wherein wind speed is simulated by simulation means (14, 15) for simulating the wind speed of a train comprising a controllable wind channel (14) and/or weather conditions are simulated by simulation means (16, 17) for simulating the weather conditions comprising means (16) for water spraying and/or for heat radiation.

17. The method according to claim 16, wherein the temperature conditions, the humidity conditions and/or the air speed conditions on the outside of the axlebox (8) are varied.

**Patentansprüche**

1. Prüfvorrichtung (1) zur Prüfung des thermischen Verhaltens eines Achslagers (8), insesondere eines Eisenbahnachslagers, umfassend:

   - eine Probekammer (9) zum Platzieren eines Achslagers (8), bestehend aus einem Achslagergehäuse (4), einem Achsstummel (3) mit einem Achszapfen und mindestens einem zwischen dem Achszapfen und dem Achslagergehäuse (4) angeordneten Lager (18), und
   - mindestens ein Temperaturmessmittel (11), **gekennzeichnet durch**

   mindestens ein Heizelement (10, 21, 22) zum Ersetzem des Lagers bzw. der Lager (18) und/oder eines und/oder mehrerer Lagerringes/Lagerringe des Lagers bzw. der Lager und/oder mindestens eines Rollelements des Lagers bzw. der Lager (18), und einen Heizleistungsregler (13) zum Regeln der Heizleistung des mindestens einen Heizelements (10, 21, 22).

2. Prüfvorrichtung (1) nach Anspruch 1, wobei das mindestens eine Heizelement (10, 21, 22) zur Anordnung zwischen dem äußeren Lagerring (20) bzw. den äußeren Lagerringen und dem inneren Lagerring (18) bzw. den inneren Lagerringen auf der Oberseite des Lagers (18) bzw. der Lager und/oder auf der gesamten Oberfläche der Lagerringe vorgesehen ist.

3. Prüfvorrichtung (1) nach einem der vorherehenden Ansprüche, wobei das mindestens eine Heizelement (10, 21, 22) zur Anordnung zwischen dem Achslagergehäuse (4) und dem Achszapfen (3) auf der Oberseite vorgesehen ist und/oder mindestens ein Heizelement (10, 21, 22) zur Anordnung zwischen dem Achslagergehäuse (4) und dem Achszapfen (3) auf der gesamten Oberfläche des Achslagergehäuses und/oder des Achszapfens vorgesehen ist.

4. Prüfvorrichtung (1) nach einem der vorherehenden Ansprüche, wobei der Heizleistungsregler (13) zum Regeln der Heizleistung des mindestens einen Heizelements (10, 21, 22) in Abhängigkeit des Reibwertes des Lagers (18), der Radialkräfte im Lager (18) im Betrieb eines Zugfahrzeugs, in welches das Achslager (8) eingebaut werden soll, der Zuggeschwindigkeit und der Geometrie des Rades des Fahrzeugs und des Achszapfens eingerichtet ist.

5. Prüfvorrichtung (1) nach einem der vorherehenden Ansprüche, wobei der Heizleistungsregler (13) zum Regeln der Heizleistung des mindestens einen Heizelements (10, 21, 22) gemäß einer Fehlfunktion des Lagers (18) eingerichtet ist.

6. Prüfvorrichtung (1) nach einem der vorherehenden Ansprüche, wobei das mindestens eine Temperaturmessmittel (11) eine Infrarotkamera, eine Wärmekamera oder einen Temperatursensor umfasst.

7. Prüfvorrichtung (1) nach einem der vorherehenden Ansprüche, wobei sie weiter ein Simulationsmittel (14, 15) zum Simulieren der Windgeschwindigkeit eines Zuges umfasst, und wobei das Simulationsmittel (14, 15) zum Simulieren der Windgeschwindigkeit eines Zuges einen regelbaren Windkanal (14) umfasst.

8. Prüfvorrichtung (1) nach einem der vorherehenden Ansprüche, wobei sie weiter ein Simulationsmittel (16, 17) zum Simulieren der Wetterverhältnisse, in denen ein Zug betrieben wird. umfasst, und wobei das Simulationsmittel (16, 17) zum Simulieren der Wetterverhältnisse Mittel (16) zum Wassersprühen und/oder zur Wärmestrahlung umfasst.

9. Prüfvorrichtung (1) nach einem der vorherehenden Ansprüche, wobei die Probekammer (9) zum Platzieren eines Achslagers (8) weiter ein On-Board-Heißläuferdetektionssystem (6) umfasst.

10. Prüfvorrichtung (1) nach einem der vorherehenden Ansprüche, wobei die Probekammer (9) zum Platzieren eines eines gleisseitigen Heißläuferdetektionssystems eingerichtet ist.

11. Prüfvorrichtung (1) nach einem der vorherehenden Ansprüche, wobei die Prüfvorrichtung weiter eine Öffnung (12) mit einer einstellbaren Öffnungszeit umfasst.

12. Prüfvorrichtung (1) nach einem der vorherehenden Ansprüche, wobei sie weiter Steuer- und Datenerfassungsgeräte (24) umfasst, die zum Abspielen von ausgewählten Zugfahrten und zur Aufzeichnung der Temperaturen von ausgewählten Stellen des Achslagers (8) eingerichtet sind.

13. Prüfvorrichtung (1) nach einem der vorherehenden Ansprüche, wobei sie eine Vielzahl von Heizelementen (10, 21, 22) umfasst und der Heizleistungsregler (13) zum asymmetrischen Regeln der Heizleistung der Heizelemente (10, 21, 22) zur Simulierung einer asymmetrischen Wärmeverteilung beim Bremsen oder Beschleunigen eingerichtet ist.

14. Verfahren zur Prüfung des thermischen Verhaltens eines Achslagers (8), umfassend die folgenden Schritte:

- das Platzieren eines Achslagers (8), bestehend aus einem Achslagergehäuse (4), einem Achsstummel (3) mit einem Achszapfen und einem zwischen dem Achszapfen und dem Achslagergehäuse (4) angeordneten Lager (18), in einer Probekammer (9) einer Prüfvorrichtung (1),
- das Ersetzen des Lagers (18) bzw. der Lager und/oder eines und/oder mehrerer Lagerringes/Lagerringe (19, 20) des Lagers (18) bzw. der Lager und/oder mindestens eines Rollelements des Lagers (18) bzw. der Lager durch mindestens ein Heizelement (10, 21, 22),
- das Regeln einer Heizleistung des mindestens einen Heizelements (10, 21, 22),
- das Messen von mindestens einer Temperatur des Achslagers (8).

15. Verfahren Nach Anspruch 14, wobei die Heizleistung des mindestens einen Heizelements (10, 21, 22) so geregelt wird, dass die Heizleistung der Wärme gleich ist, die durch Reibung in einem Lager (18) eines Fahrzeugs im Betrieb bei unterschiedlichen Last- und Geschwindigkeitsverhältnissen erzeugt wird.

16. Verfahren Nach Anspruch 14 oder 15, wobei die Windgeschwindigkeit von einem Simulationsmittel (14, 15) mit einem regelbaren Windkanal (14) zum Simulieren der Windgeschwindigkeit eines Zuges simuliert wird und/oder die Wetterverhältnisse von einem Simulationsmittel (16, 17) mit Mitteln (16) zum Wassersprühen und/oder zur Wärmestrahlung zum Simulieren der Wetterverhältnisse simuliert werden.

17. Verfahren Nach Anspruch 146, wobei die Temperaturverhältnisse, die Feuchtigkeitsverhältnisse und/oder die Luftgeschwindigkeitsverhältnisse auf der Außenseite des Achslagers (8) variiert werden.

## Revendications

1. Installation (1) d'essai pour tester le comportement thermique d'une boîte (8) d'essieu, en particulier d'une boîte d'essieu ferroviaire, comprenant

- une chambre (9) à échantillon pour placer une boîte (8) d'essieu comprenant un corps (4) de boîte d'essieu, une extrémité (3) d'essieu ayant une fusée d'essieu et au moins un palier (18) placé entre la fusée d'essieu et le corps (4) de la boîte d'essieu, et
- au moins un moyen (11) de mesure de la température,
**caractérisée par**

au moins un élément (10, 21, 22) chauffant pour remplacer le palier ou les paliers (18) et/ou une ou plusieurs bagues (19, 20) du palier ou des paliers et/ou au moins un roulement du palier ou des paliers (18), et une commande (13) de la puissance de chauffage pour commander une puissance de chauffage du au moins un élément (10, 21, 22) chauffant.

2. Installation (1) d'essai suivant la revendication 1, dans laquelle le au moins un élément (10, 21, 22) chauffant est prévu pour être placé entre la bague (20) extérieure de palier ou les bagues extérieures de palier et la bague (18) intérieure de palier ou les bagues intérieures de palier du côté du sommet du palier (18) ou des paliers ou/et sur toute la surface des bagues de palier.

3. Installation (1) d'essai suivant l'une des revendications précédentes, dans laquelle le au moins un élément (10, 21, 22) chauffant est prévu pour être placé entre le corps (4) de la boîte d'essieu et la fusée (3) d'essieu au sommet ou/et au moins un élément (10, 21, 22) chauffant est prévu pour être placé entre le corps (4) de la boîte d'essieu et la fusée (3) d'essieu sur toute la surface du corps de la boîte d'essieu et/ou de la fusée d'essieu.

4. Installation (1) d'essai suivant l'une des revendications précédentes, dans laquelle la commande (13) de la puissance de chauffage est configurée pour commander la puissance du chauffage du au moins un élément (10, 21, 22) chauffant, en fonction du coefficient de frottement du palier (18), des forces radiales dans le palier (18) pendant le fonctionnement d'un véhicule d'un train, dans lequel la boîte (8) d'essieu est destinée à être montée, de la vitesse de train et de la géométrie d'une roue du véhicule et de la fusée de l'essieu.

5. Installation (1) d'essai suivant l'une des revendications précédentes, dans laquelle la commande (13) de la puissance du chauffage est configurée pour commander la puissance du chauffage du au moins un élément (10, 21, 22) chauffant, en fonction d'un fonctionnement défaillant du palier (18).

**6.** Installation (1) d'essai suivant l'une des revendications précédentes, dans laquelle le au moins un moyen (11) de mesure de la température comprend une caméra infrarouge, une caméra thermique ou une sonde de température.

**7.** Installation (1) d'essai suivant l'une des revendications précédentes, dans laquelle elle comprend, en outre, des moyens (14, 15) de simulation pour simuler la vitesse du vent d'un train, et dans laquelle les moyens (14, 15) de simulation, pour simuler la vitesse du vent d'un train, comprend un canal (14) de vent réglable.

**8.** Installation (1) d'essai suivant l'une des revendications précédente, dans laquelle elle comprend, en outre des moyens (16, 17) de simulation pour simuler les conditions atmosphériques dans lequel un train fonctionne, et dans laquelle les moyens (16, 17) de simulation, pour simuler les conditions atmosphériques, comprennent des moyens (16) de projection d'eau et/ou de rayonnement calorifique.

**9.** Installation (1) d'essai suivant l'une des revendications précédentes, dans laquelle la chambre (9) à échantillon est configurée pour placer une boite (8) d'essieu, comprenant, en outre, un système (6) embarqué de détection de boîte chaude.

**10.** Installation (1) d'essai suivant l'une des revendications précédentes, dans laquelle la chambre (9) à échantillon est configurée pour placer un système (7) de voie de détection de boîte chaude.

**11.** Installation (1) d'essai suivant l'une des revendications précédentes, dans laquelle l'installation d'essai comprend, en outre, une ouverture (12) ayant un temps d'ouverture réglable.

**12.** Installation (1) d'essai suivant l'une des revendications précédentes, dans laquelle elle comprend, en outre, un équipement (24) de commande et de consignation de données, configuré pour jouer des marches de train sélectionnées et pour consigner les températures d'emplacements sélectionnés de la boite (8) d'essieu.

**13.** Installation (1) d'essai suivant l'une des revendications précédentes, dans laquelle elle comprend une pluralité d'éléments (10, 21, 22) chauffants et la commande (13) de la puissance de chauffage est configurée pour commander la puissance de chauffage des éléments (10, 21, 22) chauffants dissymétriquement, afin de simuler une répartition dissymétrique de la chaleur dans le cas d'un freinage ou d'une accélération.

**14.** Procédé de test du comportement thermique d'une boite (8) d'essieu ferroviaire, comprenant les stades suivants :

- on met une boîte (8) d'essieu, comprenant un corps (4) de boite d'essieu, une extrémité (3) d'essieu ayant une fusée d'essieu et un palier (18) placé entre la fusée d'essieu et le corps (4) de la boîte d'essieu dans une chambre (9) à échantillon d'une installation (1) d'essai,
- on remplace le palier (18) ou des paliers ou une bague ou des bagues (19, 20) du palier (18) ou des paliers ou au moins un élément de roulement du palier (18) ou des paliers par au moins un élément (10, 21, 22) chauffant,
- on règle une puissance de chauffage du au moins un élément (10, 21, 22) chauffant,
- on mesure au moins une température de la boîte (8) d'essieu.

**15.** Procédé suivant la revendication 14, dans lequel on règle la puissance de chauffage du au moins un élément (10, 21, 22) chauffant, de manière à ce que la puissance de chauffage soit équivalente à la chaleur produite par le frottement dans un palier (18) d'un véhicule en fonctionnement dans des conditions différentes de charge et de vitesse.

**16.** Procédé suivant la revendication 14 ou 15, dans lequel on simule une vitesse du vent par des moyens (14, 15) de simulation pour simuler la vitesse du vent d'un train, comprenant un canal (14) de vent réglable et/ou on simule des conditions atmosphériques par des moyens (16, 17) de simulation pour simuler les conditions atmosphériques, comprenant des moyens (16) de projection d'eau et/ou de rayonnement calorifique.

**17.** Procédé suivant la revendication 16, dans lequel on fait varier les conditions de température, les conditions d'humidité et/ou les conditions de vitesse de l'air à l'extérieur de la boîte (8) d'essieu.

Fig. 1

Fig. 2

**REFERENCES CITED IN THE DESCRIPTION**

**Patent documents cited in the description**

- CN 105136457 A